# Europäisches Patentamt

# European Patent Office

# Office européen des brevets

(11) Veröffentlichungsnummer: **0 589 256 A1**

## EUROPÄISCHE PATENTANMELDUNG

(21) Anmeldenummer: **93114032.1**

(22) Anmeldetag: **02.09.93**

(51) Int. Cl.5: **C08F 220/12, C04B 24/26**

(30) Priorität: **25.09.92 AT 1906/92**

(43) Veröffentlichungstag der Anmeldung:
**30.03.94 Patentblatt 94/13**

(84) Benannte Vertragsstaaten:
**AT BE CH DE ES FR GB GR IT LI NL PT SE**

(71) Anmelder: **Chemie Linz Gesellschaft m.b.H.**
**St.Peter-Strasse 25**
**A-4021 Linz(AT)**

(72) Erfinder: **Albrecht, Gerhard, Dr.**
**Im Blumengrund 19**
**A-4060 Leonding(AT)**
Erfinder: **Leitner, Hubert**
**Oberhauserstrasse 149**
**A-8967 Haus/Ennstal(AT)**
Erfinder: **Werenka, Christian**
**Mitterbauerstrasse 14**
**A-4052 Ansfelden(AT)**

(74) Vertreter: **Kunz, Ekkehard, Dr.**
**Chemie Linz Ges.m.b.H.**
**Abteilung Patente**
**St. Peter-Str. 25**
**A-4021 Linz (AT)**

(54) **Polymerisate und Polymerdispersionen sowie deren Verwendung in hydraulischen Bindemitteln.**

(57) Polymerisate und wäßrige Polymerdispersionen, die aus Monomeren aus der Gruppe von ungesättigten Carbonsäuren, ungesättigten Carbonsäureestern, ungesättigten Sulfonsäuren und ungesättigten N-substituierten cyclischen Dicarbonsäureimiden aufgebaut sind, sowie deren Verwendung als Zusatzmittel zu hydraulischen Bindemitteln.

Die Erfindung betrifft Polymerisate und Polymerdispersionen auf Basis von Carbonsäuren, Carbonsäureestern, Sulfonsäuren und cyclischen Imiden, ein Verfahren zu deren Herstellung, sowie deren Verwendung als Zusatzmittel zu hydraulischen Bindemitteln.

Polymerisate auf Basis von Butadien, Vinylacetat, Vinylchlorid, Vinylidenchlorid und Acrylsäureestern als Zusatzstoffe zu hydraulischen Bindemitteln wie z. B. Zement, Gips oder Anhydrit sind bekannt. Um flexible, dehnbare Zement-Kunststoff-Verbunde für Beschichtungen, Kitte, Dichtungsmassen, Elastikschlämme und Klebstoffe zu erzeugen, werden bevorzugt weiche Polymere mit Glastemperaturen (Tg) bzw. Einfriertemperaturen von unter 0°C eingesetzt.

In der DE-OS 15 69 910 werden beispielsweise Polymere ethylenisch ungesättigter Verbindungen als Bindemittel in Kitten und Dichtungsmassen beschrieben. Es handelt sich dabei um Gemische von Emulsionspolymerisaten aus ungesättigten Carbonsäureestern, Butadien, Isopren, Isobuten, Vinylalkylethern etc., deren Tg jeweils unter -5°C liegt. Aus der DE-OS 25 24 064 sind wäßrige Dispersionen von Copolymerisaten mit Tg von -15 bis -75°C bekannt, die aus mindestens einem Ester der Acryl- oder Methacrylsäure, Vinylacetat, maximal 1,5 Gew. % 2-Acrylamido-2-methylpropansulfonsäure und weiteren Monomeren wie Acrylnitril, Styrol und Vinylchlorid bestehen. Diese Kunststoffdispersionen dienen als Klebestoffe in druckempfindlichen Klebstreifen, die gut auf Harzoberflächen, Papier und Metall haften. Der Nachteil dieser Dispersionen liegt vor allem in ihrer schlechten Zementverträglichkeit.

In der DE-OS 32 20 384 werden wäßrige Kunststoffdispersionen auf Basis eines Copolymers von olefinisch ungesättigten Monomeren, amidgruppenhaltigen Monomeren und ungesättigten Sulfonsäuren, bei denen die Sulfogruppe entweder über eine Estergruppe oder über eine Amidgruppe an Acrylsäure oder Methacrylsäure gebunden ist, beschrieben. Besonders geeignete Monomere sind 2-Ethylhexylacrylat als weichmachendes Grundmonomer sowie Acrylnitril, Methylmethacrylat oder Styrol als harte Comonomere. Die Dispersionen sind zementverträglich und weisen im Verbund mit Zement gute mechanische Eigenschaften wie z. B. Zugfestigkeit und Dehnung auf. Die Wasserbeständigkeit der Polymerfilme und die Dauerhaftigkeit der erhärteten Zement-Kunststoff-Baustoffmassen nach 28-tägiger Luft-Wasser-Wechsellagerung ist jedoch unbefriedigend, insbesondere ihre Langzeitelastizität ist für die meisten Einsatzgebiete nicht ausreichend.

Kunststoffdispersionen die durch Emulsionspolymerisation von Estern aus ungesättigten Carbonsäuren, Styrol oder Vinyltoluol und einer olefinisch ungesättigten Sulfonsäure auf Basis von Acrylsäure oder Methacrylsäure erhalten werden, sind aus der DE-OS 38 38 294 bekannt. Eine besonders geeignete Kombination ist 2-Ethylhexylacrylat, Styrol und 2-Acrylamido-2,2-dimethylethansulfonsäure. Die Polymeren werden in Abmischungen mit Zement, Sand und weiteren Zuschlagstoffen für Beschichtungen, rißüberbrückende Überzugsmassen und Fugenmassen verwendet. Die derart hergestellten Baustoffmassen weisen jedoch eine nur sehr geringe Festigkeit auf.

Aus der JP-A 62-108 759 sind Polymerzementzusammensetzungen auf Basis wäßriger Copolymerdispersionen bekannt, die ein Maleimidderivat, welches am N-Atom einen C1- bis C4-Alkyl-, Cyclohexyl- oder maximal monosubstituierten Phenylrest trägt, sowie Monomere wie z. B. 2-Ethylhexylacrylat, n-Butylacrylat, Vinylidenchlorid, Styrol, Acrylnitril, Methylmethacrylat, Vinylacetat, Ethylen, Vinylchlorid, Acrylsäure, Acrylamid, Methacrylamid, welche derart kombiniert werden, daß die Mindestfilmbildetemperatur des erhaltenen Copolymeren unter 0°C liegt, enthalten. Als Maleimide werden N-Phenylmaleimid, N-Methylphenylmaleimid, N-Hydroxyphenylmaleimid, N-Methoxyphenylmaleimid, N-Benzoesäuremaleimid, N-Methylmaleimid, N-tert. Butylmaleimid etc. eingesetzt. Die Polymerdispersionen werden in Form von Abmischungen mit Zement als Anstrichstoffe für Holz-, Beton, Mörtel-, Schiefer-, Stahl-, Aluminium-, Faser-, Glas- und Kunststoffbeschichtungen verwendet. Nachteilig ist jedoch, daß die Polymerisate Acrylamid bzw. Methacrylamid enthalten, die in der stark alkalischen Zementmischung Ammoniak freisetzen und damit zu extremen Geruchsbelästigungen führen.

Aus Patent Abstracts of Japan, Kokai 63-81177 und Kokai 63-117056 sind Polymerisate aus ungesättigten Carbonsäuren, Alkyl(meth)acrylaten und N-substituierten Maleimiden bekannt, die zur Verhinderung von Algen bzw. gemeinsam mit halogenierten Phosphorverbindungen als flammfeste Kunststoffe eingesetzt werden.

Aufgabe der Erfindung war die Bereitstellung von Polymerisaten bzw. von deren Dispersionen auf der Basis elastischer Copolymerer, welche die genannten Nachteile nicht aufweisen. Derartige Copolymere wurden erfindungsgemäß durch Copolymerisation verschiedener ungesättigter Monomerer auf Basis von Carbonsäuren, Carbonsäureestern, Sulfonsäuren und cyclischen Imiden erhalten.

Gegenstand der Erfindung sind demnach Polymerisate, die durch Polymersiation von

a) 70 bis 98 Gew.% von Estern aus alpha, beta-monoethylenisch ungesättigten Carbonsäuren und C1 bis C12-Alkoholen oder eines Gemisches solcher Ester,

2

b) 0,05 bis 15 Gew.% von N-substituierten cyclischen Imiden von alpha, beta-monoethylenisch ungesättigten Dicarbonsäuren,

c) 0,05 bis 5 Gew.% von alpha, beta-monoethylenisch ungesättigten Carbonsäuren,

d) 0 bis 28 Gew.% weiterer copolymerisierbarer Monomerer

e) 0,05 bis 1 Gew.% von olefinisch ungesättigten Sulfonsäuren

erhalten werden.

Die Polymerisate sind bevorzugt aus

a) 85 bis 96 Gew.% von Estern aus alpha, beta-monoethylenisch ungesättigten Carbonsäuren und C1 bis C12-Alkoholen oder eines Gemisches solcher Ester,

b) 0,5 bis 7,5 Gew.% von N-substituierten cyclischen Imiden von alpha, beta-monoethylenisch ungesättigten Dicarbonsäuren,

c) 0,25 bis 2,0 Gew.% von alpha, beta-monoethylenisch ungesättigten Carbonsäuren,

d) 0 bis 13 Gew.% weiterer copolymerisierbarer Monomerer,

e) 0,25 bis 0,75 Gew.% von olefinisch ungesättigten Sulfonsäuren

aufgebaut.

Ein weiterer Gegenstand der Erfindung sind wäßrige Polymerdispersionen, in denen die erfindungsgemäßen Polymerisate in wäßrigem Medium, das gegebenenfalls Dispergatoren, Emulgatoren, Schutzkolloide sowie weitere übliche Zusätze enthalten kann, dispergiert sind. Die Polymerdispersionen weisen Feststoffgehalte von vorzugsweise etwa 40 bis 75 Gew.%, besonders bevorzugt 50 bis 70 Gew.% auf.

Die Auswahl der Monomeren sowie ihre gewichtsmäßige Verteilung erfolgt bevorzugt so, daß das Mischpolymerisat eine Glastemperatur von maximal 0°C, vorzugsweise maximal -20°C aufweist, um daraus formulierten hydraulischen Bindemittelzusammensetzungen eine hohe Elastizität auch bei sehr niedrigen Temperaturen zu verleihen. Nach T. G. FOX (Bull. Am. Phys. Soc., Ser. II, 1, 1956, S 123) kann die Glastemperatur von Mischpolymerisaten aus den Glastemperaturen der Homopolymeren der Einzelkomponenten in guter Nährung ermittelt werden. Zur Einstellung der gewünschten Glastemperatur werden daher Monomere der Gruppe a), deren Homopolymere Glastemperaturen von üblicherweise unter 0°C, zumeist unter -40°C aufweisen mit Monomeren aus den Gruppen b) bis d), bzw. e), deren Homopolymere Glastemperaturen von üblicherweise über +20°C, zumeist über +60°C haben, kombiniert.

Als Monomere der Gruppe a) werden mit Vorteil $C_1$- bis C12-Alkylester von olefinisch ungesättigten Mono- oder Dicarbonsäuren mit 3 bis 5 Kohlenstoffatomen verwendet. Beispiele für solche Ester sind Ethylacrylat, n-Butylacrylat, n-Hexylacrylat, 2-Ethylhexylacrylat, n-Dodecylacrylat, 2-Ethylhexylmethacrylat, Methylmethacrylat, n-Butylcrotonat, Dibutylfumarat, Dioctylfumarat, Dibutylmaleinat, Dioctylmaleinat, Dibutylitaconat, Dioctylitaconat. Besonders bevorzugt sind 2-Ethylhexylacrylat und n-Butylacrylat, gegebenenfalls kombiniert mit Methylmethacrylat.

Als Monomere der Gruppe b) werden cyclische Imide eingesetzt, die sich von alpha, beta-monoethylenisch ungesättigten Dicarbonsäuren, vorzugsweise Maleinsäure ableiten und am Imidstickstoff einen Alkyl-, Cycloalkyl- oder Arylrest tragen, der gegebenenfalls substituiert sein kann. Als Beispiele für derartige Monomere kommen N-Methylmaleimid, N-Ethylmaleimid, N-tert.Butylmaleimid, N-Cyclohexylmaleimid, N-Hydroxyethylmaleimid, N-Phenylmaleimid, N-Methylphenylmaleimid, N-Hydroxyphenylmaleimid, N-Methoxyphenylmaleimid, N-(2,6-Dimethylphenyl)-maleimid in Frage. Vorzugsweise eingesetzte Monomere sind N-Phenylmaleimid sowie N-(2,6-Dimethylphenyl)-maleimid.

Monomere der Gruppe c) verbessern insbesondere die Stabilität von wäßrigen Dispersionen der Polymerisate. Es handelt sich hierbei um wasserlösliche alpha, beta-monoethylenisch ungesättigte Carbonsäuren wie z. B. Acrylsäure, Crotonsäure, Fumarsäure, Maleinsäure, Itaconsäure. Als besonders geeignet erweisen sich Acrylsäure und Methacrylsäure.

Um die anwendungstechnischen Eigenschaften der Polymerdispersionen zu optimieren, werden gegebenenfalls weitere Monomere (Gruppe d) mitverwendet. Beispiele für solche Monomere sind Acrylnitril, Styrol, Vinylchlorid, Vinylacetat, Vinylpropionat, 2-Chlorbutadien sowie di- oder trifunktionelle Monomere wie Ethylenglycoldiacrylat, Divinylbenzol, Pentaerythrittriacrylat, Triethylenglykoldimethacrylat, 2-Hydroxyethylacrylat, N-Methylolacrylamid, Glycidylmethacrylat und gamma-Methacryloxypropyltrimethoxysilan.

Die Sulfonsäuregruppen enthaltenden Monomeren der Gruppe e) bringen vor allem zusätzliche Stabilisierungseffekte für die dispergierten Polymerteilchen bei der Herstellung und Lagerung der Polymerdispersionen. Darüberhinaus verbessern sie die Zementverträglichkeit der Dispersionen und damit die Homogenität des Verbundes aus organischen und mineralischen Bestandteilen. Beispiele für geeignete olefinische ungesättigte Sulfonsäuren sind 4-Styrolsulfonsäure, 3-Sulfopropylacrylat, 3-Sulfopropylmethacrylat, 2-Sulfoethylacrylat, 2-Sulfoethylmethacrylat, 2-Acrylamido-2,2-dimethylethansulfonsäure und 2-Methacrylamido-2,2-dimethylethansulfonsäure. Besonders bevorzugt wird 2-Acrylamido-2,2-dimethylethansulfonsäure verwendet.

Die Herstellung der erfindungsgemäßen Polymerisate bzw. Polymerdispersionen erfolgt durch Polymerisation der betreffenden Monomere der Gruppen a) bis d) bzw. e) in wäßrigem Medium in Gegenwart von radikalbildenden Initiatoren, Dispergatoren, Emulgatoren sowie gegebenenfalls von Reglern und Schutzkolloiden. Die Polymerisation kann sowohl als Chargenprozeß als auch in Form eines Zulaufverfahrens durchgeführt werden, wobei in beiden Fällen auch stufenweise polymerisiert werden kann. Bevorzugt ist das Zulaufverfahren, bei dem man einen Teil des Polymerisationsansatzes vorlegt, auf die Reaktionstemperatur erhitzt und anschließend die Monomere in reiner oder emulgierter Form einerseits und den Initiator, sowie gegebenenfalls Coinitiator und weitere Polymerisationshilfsstoffe andererseits aus getrennten Zuläufen kontinuierlich zuführt. Die Zufuhr der Monomeren erfolgt vorzugsweise in Form einer wäßrigen Emulsion. Nach beendeter Zugabe wird die Polymerisation durch Erhitzen bei einer gegebenenfalls um 5 bis 10 °C höheren Temperatur vervollständigt, das Reaktionsgemisch auf Raumtemperatur abgekühlt und durch Zugabe einer wasserlöslichen Base, vorzugsweise einem Alkalihydroxyd auf pH 8 bis 9 eingestellt. Die Polymerisationstemperatur liegt zwischen etwa 20 und 100 °C vorzugsweise bei 40 bis 90 °C. Die Polymerisationstemperatur wird so eingestellt, daß die zum Einsatz kommenden Initiatoren ausreichend schnell in die zur Umsetzung benötigten reaktionsfähigen Radikale zerfallen. Die Menge der radikalbildenden Initiatoren beträgt etwa 0,1 bis 1 Gew.%, bezogen auf die Gesamtmenge der eingesetzten Monomere. Besonders geeignet sind wasserlösliche anorganische Peroxide, von denen Peroxodisulfate wie Natriumperoxodisulfat und Kaliumperoxodisulfat besonders bevorzugt sind. Gegebenenfalls erfolgt der Einsatz der Initiatoren in Kombinaiton mit Reduktionsmitteln wie Formaldehydnatriumsulfoxylat, Natriumsulfit, Na-hydrogensulfit, Na-pyrosulfit, Na-dithionit, Na-thiosulfat und/oder Ascorbinsäure, Hydroxylamin oder Hydrazin. Das Reduktionsmittel kann zusätzlich mit einer als Beschleuniger wirkenden Menge eines Schwermetallsalzes, wie Eisen-, Cobalt-, Cer- oder Vanadylsalzen kombiniert werden. Zur Vervollständigung des Umsatzes und zur Senkung der Restmonomerenteile kann auch eine nachträgliche Zugabe zusätzlicher Mengen an Initiator bzw. kombinierter Systeme erfolgen.

Das mittlere Molekulargewicht des dispergierten Polymerisates ist neben der Glastemperatur und der Vernetzungsdichte die wichtigste molekulare Einflußgröße für entscheidende anwendungstechnische Eigenschaften der Produkte wie z. B. Klebrigkeit, Adhäsion, Viskoelastizität, Zugfestigkeit.

Wenn der angestrebte Bereich des Molekulargewichtes durch Veränderung der Polymerisationstemperatur bzw. der Initiatormenge nicht erreicht wird, können zusätzliche, das Molekulargewicht regelnde, Substanzen wie z. B. n-Butylmercaptan, tert. Butylmercaptan, n-Dodecylmercaptan, Thioglykol, Thioglykolsäure u. a. in einer Menge von bis zu etwa 2 Gew.%, bezogen auf die Gesamtmenge eingesetzter Monomere verwendet werden. Bevorzugt wird dabei tert. Dodecylmercaptan eingesetzt. Die Zugabe des Reglers erfolgt nach Belieben, vorzugsweise jedoch zusammen mit den Monomeren.

Beim erfindungsgemäßen Polymerisationsverfahren können die in der Emulsionspolymerisation üblichen anionischen, nichtionischen oder kationischen Emulgiermittel oder deren verträgliche Gemische eingesetzt werden, vorausgesetzt, daß sie sowohl in der Wasserphase als auch in der Monomerphase ausreichend löslich sind und keine störenden Wechselwirkungen mit den Monomeren und anderen Zusätzen auftreten. Als ionische Emulgatoren werden bevorzugt anionische Tenside verwendet. Besonders bewährt haben sich durch Ethoxylierung und Sulfatierung von $C_8$-$C_{10}$-Alkylphenolen hergestellte Emulgiermittel. Sie leiten sich beispielsweise ab von Nonylphenol, Isononylphenol, Isooctylphenol, Triisobutylphenol und Tritert. Butylphenol und tragen 3 bis 30 Ethylenoxideinheiten. Weitere Beispiele für mögliche anionische Emulgatoren sind Alkalimetallsalze von Alkylsulfonsäuren wie z. B. Natriumdodecylsulfonat, Alkylarylsulfonsäuren wie z. B. Natriumdodecylbenzolsulfonat sowie ethoxylierte und sulfatierte Fettalkohole mit einem $C_8$-$C_{25}$-Alkylrest und einem Ethoxylierungsgrad von 5 bis 50 wie z. B. Natriumlaurylalkoholethersulfat mit 3 EO-Einheiten.

Als nichtionische Emulgiermittel werden bevorzugt Umsetzungsprodukte von $C_8$-$C_{10}$-Alkylphenolen mit 3 bis 30 Mol Ethylenoxid verwendet. Außerdem sind Ethoxylierungsprodukte von $C_{10}$-$C_{20}$-Alkanolen, wie z. B. Laurylalkoholpolyglykolether und Umsatzprodukte von Polypropylenglykol und Ethylenoxid geeignet.

Die gewünschte mittlere Teilchengröße der dispersen Phase läßt sich in bekannter Weise durch Typ und Menge der verwendeten Emulgatoren steuern, wobei die Polymerisatteilchen um so größer werden, je kleiner die verwendete Emulgiermittelmenge ist. Bezogen auf die Monomermenge werden etwa 0,2 bis 10 Gew.% bevorzugt 0,5 bis 7 Gew.% Emulgiermittel verwendet, wobei sich Gemische aus einem im Unterschuß eingesetzten anionischen und einem nichtionischen Emulgator besonders bewähren.

Zur Herstellung von wasserfreien Polymerisaten werden die Polymerdispersionen durch Erhitzen, gegebenenfalls unter Anwendung eines Vakuums getrocknet. Besonders vorteilhaft erfolgt die Trocknung durch Sprühtrocknung bzw. durch Gefriertrocknung.

Die erfindungsgemäßen Polymerisate, sowie die gemäß den Ansprüchen 6 und 8 nur aus den Monomerkomponenten a) bis d) aufgebauten Polymerisate, insbesondere in Form ihrer Polymerdispersionen, werden bevorzugt als Zusatzmittel zu hydraulischen Bindemitteln verwendet. Sie sind mit hydraulischen Bindemitteln wie z. B. Zement, Kalk, Gips oder Anhydrit gut verträglich und daher in vorteilhafter Weise in Baustoffmassen, die zusätzlich auch noch andere anorganische und/oder organische Bestandteile wie z. B. Sand, Kiese, Verstärkungsfasern enthalten können, einsetzbar. Derartige Baustoffmassen auf Basis von solche Polymerisate enthaltender hydraulischer Bindemittel weisen eine erhöhte Flexibilität bzw. Elastizität auch bei sehr niedrigen Temperaturen auf und sind beispielsweise als Baustoffe, Fugenmassen, Dichtungsmassen, Reparaturmassen, Überzugsmassen, Lärmschutzmassen, Straßenbelagsmassen, Bauklebemassen, Zwischenschichten und Ausgleichsschichten geeignet.

Die erfindungsgemäßen Polymerisate und Polymerdispersionen, sowie Polymerisate und Polymerdispersionen auf Basis der Monomerkomponenten a) bis d), eignen sich besonders gut als Bindemittel in zementhaltigen Zusammensetzungen. Zur Herstellung derartiger Zusammensetzungen wird beispielsweise die entsprechende Menge an hydraulischen Bindemitteln, beispielsweise Zement, bevorzugt Portlandzement vorgelegt und gegebenenfalls mit weiteren Zusätzen wie Sand, Kunststoffasern etc. trocken vorgemischt. Danach erfolgt der Zusatz der gegebenenfalls mit Anmachwasser verdünnten Polymerdispersion. Es ist jedoch auch möglich, die Polymerisate in wasserfreier Form, gemeinsam mit den hydraulischen Bindemitteln vorzulegen.

Ein Vorteil der erfindungsgemäßen Produkte besteht u. a. darin, daß das als comonomerer Bestandteil enthaltene N-substituierte cyclische Imid der alpha, beta-monoethylenisch ungesättigten Dicarbonsäuren unter den stark alkalischen Bedingungen einer frisch hergestellten Zementsuspension zum entsprechenden Dicarbonsäuremonoamid hydrolysiert, was zu einer Thixotrophierung der daraus hergestellten Baustoffmasse während deren Verarbeitung führt. Es werden weichplastische, gut verarbeitbare, nicht zum Absetzen und zur Entmischung neigende Frischmischungen mit einer homogenen Verteilung der Kunststoffpartikel in der mineralischen Matrix erhalten. Der Zusatz von Hilfsmitteln zur Rheologiemodifizierung, insbesondere zur Thixotrophierung, der oft auch zu unerwünschten Nebenerscheinungen wie einer erhöhten Wasseraufnahme, eventuell unter Quellung der erhärteten Baustoffmasse führt, ist daher nicht notwendig.

Auf die Menge des hydraulischen Bindemittels bezogen, werden bevorzugt 10 bis 150, besonders bevorzugt 50 bis 100 Gew.% der erfindungsgemäßen Polymerisate, berechnet als Festharz eingesetzt. Dies entspricht einem Kunststoff-Bindemittel-Faktor von 0,1 bis 1,5 besonders bevorzugt von 0,5 bis 1,0.

Die auf den erfindungsgemäßen Polymerisaten und Polymerdispersionen basierenden bindemittelhaltigen Zusammensetzungen sind geruchfrei und eignen sich unter anderem besonders zur Herstellung flexibler rißüberbrückender Beschichtungen bei der Sanierung von beispielsweise Beton, wo sie unter anderem als Korrosionsschutz und als Carbonatisierungsbremse wirken, sowie bei der Sanierung von Gebäuden, beispielsweise bei der Abdichtung und Konservierung von Fassaden und Dächern. Weiterhin sind sie zur Herstellung schalldämpfender Baustoffmassen beispielsweise für Gleisanlagen einsetzbar, um den Verkehrslärm von Schienenfahrzeugen zu vermindern.

Beispiel 1:

In einer doppelwandigen 2,5 1-Polymerisationsapparatur mit Rührer, Rückflußkühler, Schutzgaseinleitung, Thermometer und separaten Anschlüssen für die Zulaufgefäße wurden 260 g deionisiertes Wasser vorgelegt und unter Durchleiten von Stickstoff auf 80 °C erwärmt. Hierzu wurden 17,5 g einer zuvor in einem separaten Gefäß unter $N_2$-Spülung bereiteten Monomeremulsion bestehend aus:

418,1 g demineralisiertem Wasser
16,5 g einer 70 %igen wäßrigen Lösung eines ethoxylierten und sulfatierten Nonylphenols (EO-Grad 4)
27,2 g eines ethoxylierten Nonylphenols (EO-Grad 10)
25,7 g (2,0 Gew.%) Methacrylsäure (Monomer C)
1,6 g (0,12 Gew.%) 2-Acrylamido-2,2-dimethylethansulfonsäure (Monomer E, Fa. Lubrizol)
32,1 g (2,5 Gew.%) N-Phenylmaleimid (Monomer B, Fa. Chemie Linz)
1,6 g (0,12 Gew.% Triethylenglykoldimethacrylat (Monomer D)
1223,4 g (95,26 Gew.%) 2-Ethylhexylacrylat (Monomer A)
unter Rühren zugegeben.

Nach Einstellung einer konstanten Starttemperatur von 80 °C wurde eine Lösung von 6,42 g Natriumpersulfat in 64 g deionisiertem Wasser während 5 Stunden, sowie der Rest der Monomeremulsion während eines Zeitraumes von 3 Stunden aus getrennten Zulaufgefäßen zugeführt. Nach beendeter Zugabe wurde die Polymerisation während weiterer 2 Stunden bei 80 °C fortgesetzt.

Die erhaltene Polymerdispersion wurde auf Raumtemperatur abgekühlt und durch Zugabe einer 10 %igen wäßrigen Natronlauge auf einen pH-Wert von 8,0 eingestellt. Die koagulatfreie Dispersion wies einen Feststoffgehalt von 62,0 Gew.% auf. Weitere Daten der erhaltenen Polymerdispersion sind in Tabelle 2 zusammengestellt.

Beispiele 2 bis 5:

Analog zu Beispiel 1 wurden Polymerdispersionen hergestellt, wobei jedoch die in Tabelle 1 angeführten Monomere eingesetzt wurden. Feststoffgehalt, Glastemperatur und dynamische Viskosität der erhaltenen Polymerdispersionen sind in Tabelle 2 zusammengestellt.

Vergleichsbeispiel V1:

Analog zu Beispiel 1 der DE-OS 32 20 384 wurde eine Polymerdispersion hergestellt, welcher folgende Monomerzusammensetzung zugrunde lag:
27,0 g (2,75 Gew.%) Methacrylamid
18,0 g (1,83 Gew.%) 2-Acrylamido-2,2-dimethylethansulfonsäure
900,0 g (91,61 Gew.%) 2-Ethylhexylacrylat
18,0 g (1,83 Gew.%) Methacrylsäure
9,0 g (0,92 Gew.%) 2-Hydroxyethylmethacrylat
1,4 g (0,14 Gew.%) Butandiol-(1,4)-dimethacrylat
Die Eigenschaften der Polymerdispersion sind in Tabelle 2 zusammengestellt.

Tabelle 1: <u>Zusammensetzung der Polymerisate</u> (in Gew. %)
Monomere*

| Beispiel | a | b | c | d | e |
|---|---|---|---|---|---|
| 1 | 95,26 A | 2,5 B | 2,0 C | 0,12 D | 0,12 E |
| 2 | 92,78 A | 5,0 B | 2,0 C | 0,12 D | 0,1 E |
| 3 | 94,88 A | 2,5 B | 2,0 C | 0,12 D | 0,5 E |
| 4 | 80,28 A | 2,5 B | 2,0 C | 0,12 D | 0,1 E |
|   | 15,00 AA | | | | |
| 5 | 95,38 A | 2,5 B | 2,0 C | 0,12 D | – |

*Verwendete Monomere:

| A | 2-Ethylhexylacrylat |
|---|---|
| AA | n-Butylacrylat |
| B | N-Phenylmaleimid (Fa. Chemie Linz) |
| C | Methacrylsäure |
| D | Triethylenglykoldimethacrylat |
| E | 2-Acrylamido-2,2-dimethylethansulfonsäure (Fa. Lubrizol) |

Tabelle 2

| Eigenschaften der Polymerdispersionen: | | | |
|---|---|---|---|
| Beispiel | Feststoffgehalt[1] (Gew.%) | Glastemperatur[2] (°C) | dynamische Viskosität[3] (mPa.s) |
| 1 | 62,0 | -55 | 52 |
| 2 | 59,9 | -52 | 54 |
| 3 | 59,5 | -54 | 135 |
| 4 | 62,2 | -53 | 595 |
| 5 | 61,7 | -56 | 58 |
| V1 | 62,4 | -45 | 248 |

1 ermittelt nach DIN 53 189

2 nach T.G.FOX. Bull. Am. Phys. Soc., Ser. II 1 (1956), 123

3 nach DIN 53 019, ISO 3219 bei 23°C und 250 $s^{-1}$

Eigenschaften der Polymerisate:

1. Wasseraufnahme von Polymerfilmen:

Zum Nachweis der Dauerhaftigkeit der erfindungsgemäßen Polymerisate gemäß den Beispielen 1 bis 5 im Vergleich zum Polymerisat gemäß Vergleichsbeispiel V1, insbesondere im Hinblick auf ihre Anwendung als konservierende und abdichtende Komponente in bindemittelhaltigen Beschichtungen für die Beton- und Gebäudesanierung speziell im Außenbereich wurde das Wasseraufnahmevermögen der Dispersionsfilme bestimmt. Eine sehr hohe Wasseraufnahme ergibt eine schlechte Witterungsbeständigkeit der Baustoffmassen.

Die Prüfung erfolgte gemäß DIN 53 495 an Polymerfilmen mit einer Oberfläche von 63 cm2 und einer Schichtdicke von 0,6 mm. Die Polymerfilme wurden aus auf 50 Gew.% verdünnten Polymerdispersionen erhalten, die in eine Form gegossen und bis zur Gewichtskonstanz bei 40°C im Umlufttrockenschrank getrocknet wurden. Nach Bestimmung ihrer Masse wurden die Polymerfilme in deionisiertem Wasser von 23°C für 24 h gelagert. Danach wurden sie durch vorsichtiges Betupfen mit Zellstofftüchern von anhaftendem Wasser befreit, gewogen und die Gewichtszunahme in Prozent errechnet. Die Ergebnisse der Prüfungen sind in Tabelle 3 zusammengefaßt.

2. Scherfestigkeit und Dehnung von Polymerisat-hältigen Baustoffen

Zur Beurteilung des mechanischen Verhaltens der erfindungsgemäßen Polymerisate im Vergleich zu bekannten Polymerisaten als Bestandteil zementhaltiger Baustoffmassen für flexible Beschichtungen und ihrer Dauerhaftigkeit im Verbund mit Zement erfolgte die Bestimmung von Scherfestigkeit und Dehnung sowohl an luft- als auch an wassergelagerten Prüfkörpern.

Zur Herstellung der Prüfkörper wurden 50 g der auf einen Feststoffgehalt von 58 Gew.% verdünnten Polymerdispersion unter Rühren zu 50 g Portlandzement (PZ 375 H, Mannersdorf) gegeben. Nach 2-minütigem Aufrühren bei 350 rpm wurde die erhaltene Zementmischung mit einem Wasser/Zement (W/Z)-Wert von 0,42 und einem Polymer/Zement (P/Z)-Wert von 0,58 in eine rechteckige Kunststofform gegossen, geglättet und 24 h an Luft getrocknet. Die flexiblen Prüfkörper wurden entschalt und weitere 3 Tage an Luft belassen. Anschließend erfolgte eine Teilung der 2 mm dicken Probekörper, wobei eine Hälfte bis zum 28. Tag weiter an der Luft gelagert wurde (23°C). Die andere Hälfte wurde bis zum 28. Tag einer kombinierten, im 12 h-Rhythmus wechselnden Luft-Wasser-Lagerung unterzogen (Wasserhärte: 6° dH). Nach 24-stündiger Trocknung der wassergelagerten Proben bei 23°C an Luft erfolgte die Prüfung der beiden auf unterschiedliche Weise gelagerten Prüfkörperhälften. Dabei wurde als Maß für die Festigkeit der Zement-Polymerisat-Verbunde gegen dynamische Beanspruchungen die Scherfestigkeit bzw. Zugfestigkeit in Abhängigkeit von der Dehnung bzw. Deformation bestimmt.

Die Prüfung erfolgte mit einem handelsüblichen Platte-Platte-Rotationsrheometerder Fa. Physica (UM-MC 20) bei 23°C unter Verwendung von Prüflingen mit einem Durchmesser von 5 mm. Dabei wurden die Prüflinge unter Verwendung des Meßsystems MP 5 PP bei einer konstanten Frequenz von 0,2 Hz oszillierend ansteigenden deformativen Belastungen ausgesetzt. Es erfolgte eine Registrierung der auftretenden Scherfestigkeiten gegen die Deformation und eine Umrechnung in Dehnungen, wie sie aus der DIN 53455 bekannt sind. Die Ergebnisse der Prüfungen sind in Tabelle 3 zusammengestellt.

Aus den Vergleichsmessungen ist die geringere Wasseraufnahme und somit bessere Witterungsbeständigkeit der erfindungsgemäßen Polymerisate im Vergleich zu bekannten Polymerisaten ersichtlich. Weites zeigen die erfindungegemäße Polymerisate enthaltenden Zementmischungen aufgrund ihrer höheren Scherfestigkeiten und Dehnungen, insbesondere auch nach einer die Witterungseinflüsse simulierenden Langzeit-Naß/Trocken-Wechsellagerung, eine bessere Dauerhaftigkeit und Langzeitelastizität bzw. Langzeitflexibilität im Vergleich zu Zementmischungen, die bekannte Polymerzusätze enthalten.

Tabelle 3

| Eigenschaften der Polymerisate und Polymerisat-Zemente | | | | |
|---|---|---|---|---|
| Bsp. | H2O-Aufnahme der Polymerisate (Gew.%) | Scherfestigkeit der Polymerisat-Zemente (Nmm$^{-2}$) | | Dehnung der Polymerisat-Zemente(%) | |
| | | Trockenlagerung | Wechsellagerung | Trockenlagerung | Wechsellagerung |
| 1 | 7,7 | 0,66 | 0,47 | 90 | 117 |
| 2 | 6,9 | 1,05 | 0,84 | 77 | 107 |
| 3 | 11,0 | 0,59 | 0,48 | 134 | 180 |
| 4 | 8,8 | 0,55 | 0,82 | 120 | 213 |
| 5 | 7,8 | 0,41 | 0,61 | 90 | 123 |
| V1 | 56,9 | 0,37 | 0,27 | 44 | 32 |

**Patentansprüche**

1. Polymerisate erhältlich durch Polymerisation von
   a) 70 bis 98 Gew.% von Estern aus alpha, beta-monoethylenisch ungesättigten Carbonsäuren und C1 bis C12-Alkoholen oder eines Gemisches solcher Ester,
   b) 0,05 bis 15 Gew.% von N-substituierten cyclischen Imiden von alpha, beta-monoethylenisch ungesättigten Dicarbonsäuren,
   c) 0,05 bis 5 Gew.% von alpha, beta-monoethylenisch ungesättigten Carbonsäuren,
   d) 0 bis 28 Gew.% weiterer copolymerisierbarer Monomerer,
   e) 0,05 bis 1 Gew.% von olefinisch ungesättigten Sulfonsäuren.

2. Polymerisate gemäß Anspruch 1, erhältlich durch Polymerisation von
   a) 85 bis 96 Gew.% von Estern aus alpha, beta-monoethylenisch ungesättigten Carbonsäuren und C1 bis C12-Alkoholen oder eines Gemisches solcher Ester,
   b) 0,5 bis 7,5 Gew.% von N-substituierten cyclischen Imiden von alpha, beta-monoethylenisch ungesättigten Dicarbonsäuren,
   c) 0,25 bis 2,0 Gew.% von alpha, beta-monoethylenisch ungesättigten Carbonsäuren,
   d) 0 bis 13 Gew.% weiterer copolymerisierbarer Monomerer,
   e) 0,25 bis 0,75 Gew.% von olefinisch ungesättigten Sulfonsäuren.

3. Wäßrige Polymerdispersionen, in der die Polymerisate gemäß Anspruch 1 oder 2 in wäßrigem Medium dispergiert sind.

4. Verfahren zur Herstellung von Polymerisaten, dadurch gekennzeichnet, daß
   a) 70 bis 98, bevorzugt 85 bis 96 Gew.% Ester aus alpha, beta-monoetylenisch ungesättigten Carbonsäuren und $C_1$- bis $C_{12}$-Alkoholen oder eines Gemisches solcher Ester,
   b) 0,05 bis 15, bevorzugt 0,5 bis 7,5 Gew.% N-substituierte cyclische Imide von alpha, beta-monoethylenisch ungesättigten Dicarbonsäuren,
   c) 0,05 bis 5, bevorzugt 0,25 bis 2,0 Gew. % alpha, beta-monoethylenisch ungesättigte Carbonsäuren,
   d) 0 bis 28, bevorzugt 0 bis 13 Gew.% weitere copolymerisierbare Monomere,
   e) 0,05 bis 1 Gew.%, bevorzugt 0,25 bis 0,75 Gew.% von olefinisch ungesättigten Sulfonsäuren
   in wäßriger Emulsion polymerisiert werden.

5. Verwendung von wäßrigen Dispersionen gemäß einem der Ansprüche 1 bis 4 als Zusatzmittel zu hydraulischen Bindemitteln.

6. Verwendung von wäßrigen Dispersionen, die durch Polymerisation von
a) 70 bis 98 Gew.% von Estern aus alpha, beta-monoethylenisch ungesättigten Carbonsäuren und C1 bis C12-Alkoholen oder eines Gemisches solcher Ester,
b) 0,05 bis 15 Gew.% von N-substituierten cyclischen Imiden von alpha, beta-monoethylenisch ungesättigten Dicarbonsäuren,
c) 0,05 bis 5 Gew.% von alpha, beta-monoethylenisch ungesättigten Carbonsäuren,
d) 0 bis 28 Gew.% weiterer copolymerisierbarer Monomerer
erhalten werden, als Zusatzmittel zu hydraulischen Bindemitteln.

7. Hydraulische Bindemittel mit einem Gehalt von Polymerisaten gemäß einem der Ansprüche 1 bis 4.

8. Hydraulische Bindemittel mit einem Gehalt von Polymerisaten die durch Polymerisation von
a) 70 bis 98 Gew.% von Estern aus alpha, beta-monoethylenisch ungesättigten Carbonsäuren und C1 bis C12-Alkoholen oder eines Gemisches solcher Ester,
b) 0,05 bis 15 Gew.% von N-substituierten cyclischen Imiden von alpha, beta-monoethylenisch ungesättigten Dicarbonsäuren,
c) 0,05 bis 5 Gew.% von alpha, beta-monoethylenisch ungesättigten Carbonsäuren,
d) 0 bis 28 Gew.% weiterer copolymerisierbarer Monomerer
erhalten werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 314 326 (DOW CHEM. CO.)<br>--- | | C08F220/12<br>C04B24/26 |
| D,A | DE-A-38 38 294 (BASF)<br>----- | | |

| RECHERCHIERTE SACHGEBIETE (Int.Cl.5) |
|---|
| C08F<br>C04B |

Der vorliegende Recherchenbericht wurde für alle Patentansprüche erstellt

| Recherchenort | Abschlußdatum der Recherche | Prüfer |
|---|---|---|
| DEN HAAG | 30. November 1993 | Cauwenberg, C |